Europäisches Patentamt

European Patent Office

Office européen des brevets

(11) Veröffentlichungsnummer: **0 240 861**
**B1**

(12) # EUROPÄISCHE PATENTSCHRIFT

(45) Veröffentlichungstag der Patentschrift:
17.01.90

(51) Int. Cl.⁴: **F16G 1/00**, F16G 1/16

(21) Anmeldenummer: 87104491.3

(22) Anmeldetag: 26.03.87

(54) **Antriebsriemen.**

(30) Priorität: 08.04.86 CH 1381/86

(43) Veröffentlichungstag der Anmeldung:
14.10.87 Patentblatt 87/42

(45) Bekanntmachung des Hinweises auf die Patenterteilung:
17.01.90 Patentblatt 90/3

(84) Benannte Vertragsstaaten:
AT CH DE ES FR GB IT LI NL

(56) Entgegenhaltungen:
DE-A- 2 715 199
DE-A- 3 347 102
FR-A- 1 254 152
FR-A- 1 524 648
GB-A- 866 474
GB-A- 1 020 624
US-A- 3 683 712

(73) Patentinhaber: Habasit AG, Römerstrasse 1,
CH-4153 Reinach(CH)

(72) Erfinder: Habegger, Fernand, Langgartenstrasse 45,
CH-4105 Biel-Benken(CH)
Erfinder: Polt, Niklaus, Birsigstrasse 121,
CH-4054 Basel(CH)
Erfinder: Groebli, Kurt, Wasserhaus 34,
CH-4142 Münchenstein(CH)

(74) Vertreter: Becher, Pauline, Dr. et al, A. Braun, Braun,
Héritier, Eschmann AG Holbeinstrasse 36-38,
CH-4051 Basel(CH)

**Beschreibung**

Die Erfindung bezieht sich auf Antriebsriemen, wie sie insbesondere als Kraft- und Drehzahlübertragungselemente bei Spindelantrieben in der Textilindustrie verwendet werden. Im Handel sind solche Antriebsriemen in unterschiedlichen Ausführungsformen erhältlich. Im folgenden werden diese bekannten Typen beschrieben.

In grossem Umfang werden traditionsgemäss Antriebsriemen aus Baumwoll- oder Kunststoff-Fasern verwendet, die auf eine bestimmte Breite gewoben und durch Nähen oder Kleben endlow verbunden werden. Ferner sind derartige Antriebsriemen auf dem Markt, die auf die bestellten Abmessungen endlos hergestellt werden. Eine Weiterentwicklung sind Antriebsriemen, die aus Bahnmaterial mit mehrerren Gewebelagen streifenförmig ausgeschnitten und endlos zusammengefügt sind. Diese bieten den Vorteil, dass die Riemen in der jeweils gewünschten Breite aus dem Bahnmaterial herausgeschnitten werden können, wobei die Enden durch Kleben verbunden werden. Schliesslich sind im Extrusionsverfahren hergestellte Antriebsriemen aus Kunststoffen bekannt.

Alle diese bekannten Antriebsriemen weisen im Hinblick auf die wichtigsten Anforderungen der Textilindustrie, nämlich zuverlässige Handhabung, Betriebssicherheit und Energieersparnis im Betrieb, erhebliche Nachteile auf. So sind die mit Klebern oder durch Anlösen mit Lösungsmitteln hergestellten Verbindungen der Riemenenden zu wenig geschmeidig und haltbar. Zudem sind diese Verbindungsverfahren aufwendig, für die Gesundheit nicht unbedenklich und auch nicht umweltfreundlich. Deshalb werden statt Klebern auch Klebefolien zwischen die zu verbindenden Riemenenden eingelegt; dabei muss aber eine Verdickung und Versteifung der Verbindungsstelle in Kauf genommen werden. Die Verwendung von Klebefolien ist überdies unrationell.

Andererseits sind die auf eine bestimmte Breite gewobenen Antriebsriemen zwar sehr geschmeidig und, wenn sie aus Baumwolle oder ähnlichen Fasern bestehen, auch relativ wärmebeständig, aber die überlappt verklebten oder vernähten Enden dieser Antriebsriemen üben bei jedem Passieren einer Spindel eine Schlagwirkung aus, was auf Kosten der Lebensdauer des Riemens und der Spindellagerung geht. Ausserdem sind diese Antriebsriemen nicht antistatisch und führen daher durch Anhaften von Faserflug zu einem unkontrollierten Schlupf und infolgedessen zu einem schlechten Wirkungsgrad.

Bei den aus Bahnmaterial mit mehreren Gewebelagen hergestellten Antriebsriemen ist man teilweise mit Erfolg dazu übergegangen, als Kettfäden reissfeste Kunststoff-Fasern und als Schussfäden relativ wärmebeständige Fasern zu verwenden. Es ist ferner bekannt, eine Gewebelage aus Kunststoff mit einer solchen aus Baumwolle zu vereinigen, wobei oft eine antistatische Zwischenschicht eingebaut wird, um das Anhaften von Faserflug zu verhindern. Wegen ihrer geringeren Geschmeidigkeit brauchen diese Antriebsriemen jedoch für den Betrieb mehr Antriebsleistung. Ferner führt diese besondere Mehrschichtstruktur zu Nachteilen insbesondere bezüglich der Schichthaftung, der Verbindung der Enden des Antriebsriemens und des Ausfransens der Kanten.

Die endlos gewobenen und die durch Extrusion von Kunststoffen hergestellten Antriebsriemen haben sich keinen nennenswerten Marktanteil sichern können. Bei den endlos gewobenen Antriebsriemen sind die Fertigung und Lagerhaltung unwirtschaftlich. Bei den im Extrusionsverfahren hergestellten, monolithischen Antriebsriemen kann den Anforderungen an die Adhäsionseigenschaften nicht funktionsgerecht entsprochen werden.

Das primäre Ziel der Erfindung ist es daher, einen Antriebsriemen zu schaffen, der diese Nachteile nicht aufweist. Um einen wirtschaftlich optimalen Betrieb im Sinne der obigen Ausführungen zu gewährleisten, müssen allerdings eine ganze Reihe funktioneller Anforderungen gleichzeitig erfüllt werden.

So muss der Verbraucher den Antriebsriemen ab Vorratsrolle verlustfrei auf die gewünschte Länge und Breite zuschneiden und seine Enden auf einfache Weise ohne Verwendung von Klebern, Lösungsmitteln oder dergleichen verbinden können, ohne dass eine Verdickung oder Versteifung der Verbindungsstelle eintritt, die zu einer Schlagwirkung beim Passieren der Spindeln führen würde. Ein weiteres wichtiges Anliegen ist die Verbesserung des Wirkungsgrades gegenüber den bekannten Antriebsriemen, die sich in einem minimalen Schlupf äussert, was zu minimalen Drehzahlverlusten und maximaler Antriebsenergie-Ersparnis führt. Damit der Antriebsriemen die Belastung in der Zugrichtung aufnehmen und die Uebertragung hoher Drehzahlen über kleine Scheibendurchmesser bei möglichst geringem Energieaufwand gewährleisten kann, müssen der Elastizitätsmodul möglichst gross und dementsprechend die Dehnung des Riemens möglichst gering sein. Die Beschaffenheit der beiden Oberflächen des Antriebsriemens hat ausserdem einen massgeblichen Einfluss auf sein Betriebsverhalten, da die Spindeln bei Fadenbruch jeweils von Hand gebremst und danach wieder rasch beschleunigt werden. Schliesslich muss der Antriebsriemen antistatisch sein, um die durch elektrostatische Aufladung entstehende Anziehung von Faserflug zu vermeiden.

Aus der GB-A 866 474 ist ein feuerbeständiger und antistatischer Antriebsriemen mit einem textilen Tragelement bekannt. Das Tragelement umfasst Garne aus brennbaren Fasern oder Filamenten einerseits und Garne aus Filamenten aus einem flexiblen thermoplastischen feuerbeständigen Polymeren von Vinylchlorid oder Vinylidenchlorid andererseits. Die brennbaren Fasern können Naturfasern (nämlich Baumwollfasern), halbsynthetische Fasern (nämlich Reyonfasern) oder Kunststoff-Fasern (nämlich Nylon- oder Polyethylenterephthalatfasern) sein. Die Fasern oder Filamente sind mit einem antistatischen Mittel, z.B. leitfähigem Russ, antistatisch gemacht. Die Fasern oder Filamente sind in eine elastische feuerbeständige thermoplastische Masse eingebettet.

In der US-A 3 683 712 wird vorgeschlagen, einen Antriebsriemen aus verwebten Baumwoll- und Nylongarnen herzustellen, von denen wenigstens ein Teil eine elektrisch leitfähige Komponente, z.B. Stapelfasern aus rostfreiem Stahl, enthält, um die Entladung von statischer Elektrizität zu erleichtern.

Die DE-A 2 715 199 betrifft einen endlosen Transmissionsriemen aus elastomerem Material mit einer Dehnzone, einer Kompressionszone und einer dazwischenliegenden Lastübertragungszone. Diesem Transmissionsriemen werden dadurch elektrisch antistatische Eigenschaften verliehen, dass wenigstens eine dieser Zonen und/oder eine weitere Zone des Riemens aus einem elektrisch leitfähigen elastomeren Material, z.B. einer leitfähigen Gummimischung, besteht.

Aufgrund praktischer Laborversuche und der dabei gewonnen Erkenntnisse wurde der erfindungsgemässe Antriebsriemen entwickelt, der eine neuartige Kombination von Materialeigenschaften aufweist, die überraschenderweise die hohen betrieblichen Anforderungen in bezug auf Flexibilität, Zugfestigkeit und Wärmebeständigkeit sowie Adhäsions- und antistatisches Verhalten in idealer Weise erfüllen und gleichzeitig eine zuverlässige Handhabung, eine hohe Betriebssicherheit und eine grosse Energie-Einsparung gewährleisten.

Die Erfindung bezieht sich somit auf einen Antriebsriemen mit einem textilen Tragelement, das aus Garnen oder Zwirnen besteht, die Kunststoff-Fasern mit einer Reissfestigkeit von mehr als 30 cN/Tex und bis mindestens 150°C wärmebeständige Naturfasern enthalten, wobei der Antriebsriemen ein elektrisch leitfähiges Element enthält und das textile Tragelement auf einer Seite mit einem unvernetzten Kunststoffbelag verbunden ist. Das textile Tragelement ist auf der vom Kunststoffbelag abgewandten Seite mit einem vernetzten Kunststoff, vorzugsweise einem vernetzten Polyurethan, imprägniert. Der Kunststoffbelag besteht aus einem unvernetzten Thermoplasten, vorzugsweise einem unvernetzten Polyurethan.

Das elektrisch leitfähige Element besteht vorzugsweise aus elektrisch leitfähigen Fäden, insbesondere Metallfäden oder Kohlenstoff-Fasern, in den Garnen oder Zwirnen oder aus einer elektrisch leitfähigen Schicht, insbesondere einer russhaltigen Haftvermittlerschicht, zwischen dem textilen Tragelement und dem Kunststoffbelag. Die Kunststoff-Fasern bestehen vorzugsweise aus Polyester, insbesondere Polyethylenterephthalat, oder aus Polyamid, und die Naturfasern bestehen vorzugsweise aus Cellulose, insbesondere Baumwolle oder Ramie.

Nachstehend werden anhand der beiliegenden Zeichnung zwei Ausführungsbeispiele der Erfindung beschrieben.

Fig. 1 ist eine vereinfachte Perspektivdarstellung eines Abschnitts eines erfindungsgemässen Antriebsriemens;

Fig. 2 ist eine vereinfachte Perspektivdarstellung eines Abschnitts eines anderen erfindungsgemässen Antriebsriemens;

Fig. 3 zeigt perspektivisch die Teile einer zum Verbinden der Riemen verwendbaren Vorrichtung, wobei unter a) bis c) drei verschiedene Phasen des Verbindungsvorgangs dargestellt sind.

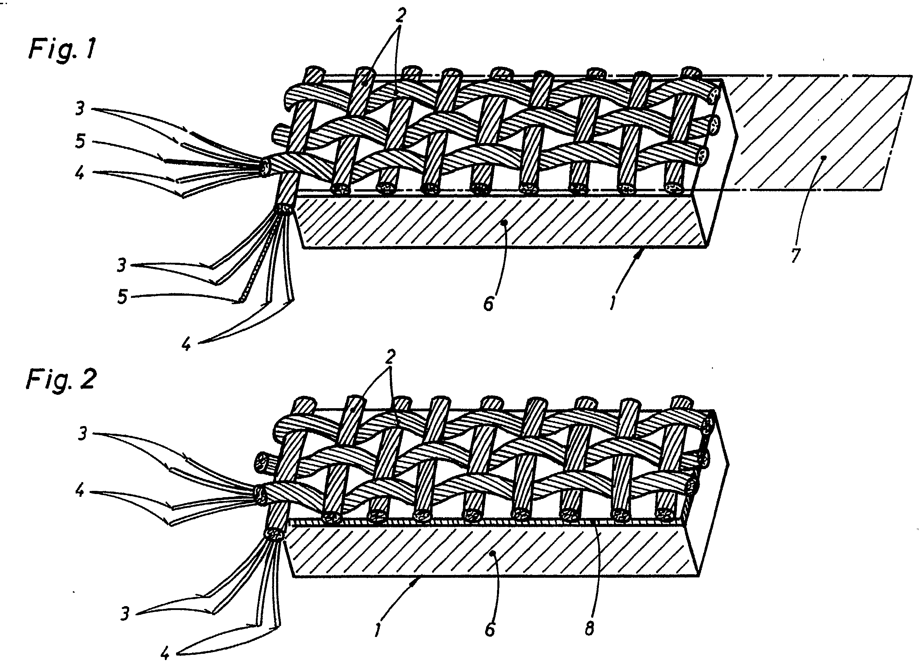

In Fig. 1 ist ein Antriebsriemen mit einem textilen Tragelement 2 dargestellt, das aus Garnen oder Zwirnen besteht, die Kunststoff-Fasern 3 mit einer Reissfestigkeit von mehr als 30 cN/Tex, bis mindestens 150°C wärmebeständige Naturfasern 4 und elektrisch leitfähige Fäden 5 enthalten. Das Tragelement 2 ist ferner auf einer Seite mit einem unvernetzten Kunststoffbelag 6 verbunden.

Die Kunststoff-Fasern 3 bestehen z.B. aus Polyester, vorzugsweise Polyethylenterephthalat, oder Polyamid; sie verleihen dem Antriebsriemen Zugfestigkeit und Dimensionsstabilität. Die wärmebeständigen Naturfasern 4 bestehen z.B. aus Cellulose, vorzugsweise Baumwolle oder Ramie; sie verleihen dem Antriebsriemen Wärmebeständigkeit und Scheuerfestigkeit. Die elektrisch leitfähigen Fäden 5, die z.B. Metallfäden oder Kohlenstoff-Fasern sind, verleihen dem Antriebsriemen antistatische Eigenschaften. Der Kunststoffbelag 6, der aus einem unvernetzten Thermoplasten, vorzugsweise einem unvernetzten Polyurethan, besteht, verleiht dem Antriebsriemen den erforderlichen Reibungskoeffizienten und ermöglicht die Verbindung der Riemenenden ohne Verdickung oder Versteifung der Verbindungsstelle und somit ohne Schlagwirkung beim Passieren der Spindeln.

In Fig. 2 ist eine andere Ausführungsform des Antriebsriemens 1 dargestellt, bei dem die Garne oder Zwirne nur Kunststoff-Fasern 3 mit einer Reissfestigkeit von mehr als 30cN/Tex und bis mindestens 150°C wärmebeständige Naturfasern 4 enthalten. Als elektrisch leitfähiges Element ist in diesem Falle eine elektrisch leitfähige Schicht 8, vorzugsweise eine russhaltige Haftvermittlerschicht, zwischen dem textilen Tragelement 2 und dem Kunststoffbelag 6 vorhanden.

Bei den in den Fig. 1 und 2 dargestellten beiden Ausführungsformen des erfindungsgemässen Antriebsriemens bewirkt die neuartige Materialkombination ein günstiges kinematisches Betriebsverhalten, da infolge des asymmetrischen Aufbaus des Antriebsriemens die neutrale Biegeebene 7 sehr nahe an die Oberfläche der Spindeln, die einen kleinen Durchmesser haben, verlegt wird. Die hohe Biegeelastizität führt zu einer hohen mittleren Lebensdauer und im Verein mit niedrigem dehnungsbedingtem Schlupf und entsprechend geringem Drehzahlverlust zu einem hohen Wirkungsgrad.

Die verwendeten Garne oder Zwirne haben noch eine Reihe weiterer technischer Fortschritte gebracht. Sie ermöglichen die Herstellung geschlossener Gewebe und damit einen erhöhten Widerstand gegen Ausfransen und Abrieb. Diese Garne oder Zwirne ergeben überdies eine flauschigere Gewebeoberfläche, die ein besseres Lärmdämpfungsvermögen aufweist und die Haftung am Kunststoffbelag begünstigt.

Weitere Vorteile des erfindungsgemässen Antriebsriemens beruhen darauf, dass durch den Einsatz von Naturfasern die Wärme- und Scheuerbeständigkeit erhöht und durch das Vorhandensein eines elektrisch leitfähigen Elementes, das heisst der elektrisch leitfähigen Fäden 5 oder der elektrisch leitfähigen Schicht 8, und durch die Imprägnierung des textilen Tragelements mit einem vernetzten Kunststoff, z.B. einem vernetzten Polyurethan, das Anhaften des Faserflugs, wie es in der Praxis durch elektrostatische Aufladung des Antriebsriemens entsteht, verhindert wird. Die vom Kunststoffbelag 6 abgewandte Seite des Antriebsriemens, das heisst die Oberfläche des Tragelementes 2, zeichnet sich durch einen optimalen Reibungskoeffizienten aus, der sowohl ein Anhalten einer Spindel bei Fadenbruch oder zwecks Spulenwechsels als auch eine kurze Spindelhochlaufzeit ermöglicht.

Andererseits hat der Kunststoffbelag 6 einen hohen Reibungskoeffizienten, was eine schlupffreie Leistungsübertragung auch bei extrem hohen Geschwindigkeiten des Antriebsriemens erlaubt. Ferner bietet der hohe Reibungskoeffizient die Gewähr dafür, dass die Drehzahlen bei der Gesamtheit der Spindeln einer Maschine konstant bleiben und dass die Spindeln nach dem Anhalten bei Fadenbruch oder zwecks Spulenwechsels schnell wieder beschleunigt werden können, und dies auch bei Langzeitbetrieb. Schliesslich gewährleistet die gute Haftung des Kunststoffbelages 6 am Tragelement 2 saubere Schneidkanten, die ein mechanisches Anhaften von Faserflug durch seitliches Ausfransen des Antriebsriemens oder durch Vorstehen von Faserfibrillen verhindern. Zu einer langen Betriebsdauer trägt auch die Tatsache bei, dass der in sehr engen Dickentoleranzen herstellbare Kunststoffbelag 6 mit einer für bestimmte Betriebsverhältnisse besonders geeigneten Oberflächenstruktur versehen ist.

Der erfindungsgemässe Antriebsriemen gewährleistet ausser gutem Betriebsverhalten aus eine zuverlässige Handhabung. Diese ist besonders bei der Verbindung der Enden des Antriebsriemens wichtig, die mit Rücksicht auf die grosse Anzahl von im Einsatz stehenden Spindeln durch ungelernte Kräfte einfach und ohne Lösungsmittel oder Nachbehandlung durchführbar sein muss.

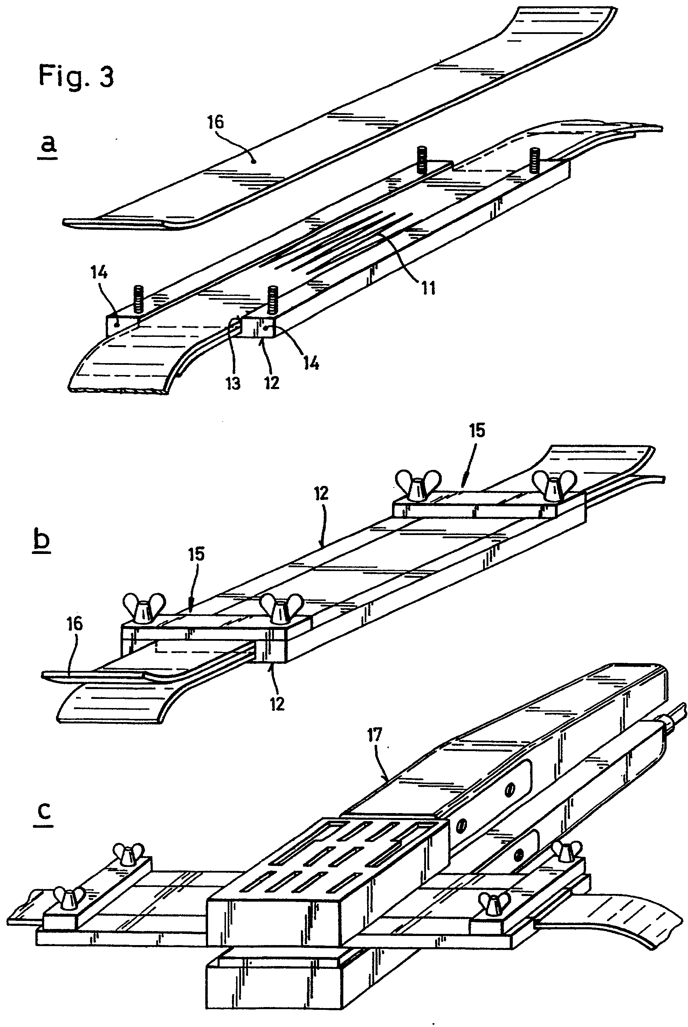

Dazu werden, wie in Fig. 3 gezeigt, die fingerartig ausgestanzten Bandenden 11 ineinander verzahnt in eine Führungsschiene 12 eingelegt, die mit einem Führungskanal 13 und seitlichen Begrenzungen 14 versehen ist (Fig. 3a). Durch eine mit Klammern 15 niedergedrückte Deckplatte 16 wird jede nachträgliche Verschiebung der zu verbindenden Enden verhindert, um eine geradlinige Verbindung der Bandenden zu gewährleisten (Fig. 3b). Die Führungsschiene (12) wird daraufhin in eine beheizte Presse 17 eingelegt (siehe Deutsches Gebrauchsmuster Nr. 83 32 647), worin der Kunststoffbelag unter dem Einfluss von Druck und Wärme zum Fliessen gebracht und der Kraftschluss der Bandenden durch Schmelzschweissung erzeugt wird. Das Tragelement 2 wird durch die fingerartige Verzahnung 11 der Bandenden ineinander verschachtelt, so dass an der Verbindungsstelle nur ein geringfügiger Zugfestigkeitsverlust in der Grössenordnung von 10 % entsteht. Es versteht sich von selbst, dass dabei keine Verdickung an der Verbindungsstelle entsteht. Somit ergibt dieses Verfahren eine homogene Verbindung der Bandenden zu einem Antriebsriemen ohne Schlagwirkung beim Passieren der Spindeln, kurze Montagezeiten und einen ruhigen Lauf des Antriebsriemens und dadurch eine entsprechende Erhöhung der Lebensdauer. Ein weiterer anwendungstechnischer Vorteil liegt darin, dass der erfindungsgemässe Antriebsriemen kontinuierlich in grossen Breiten und Längen hergestellt und unter Erzielung scharfer, sauberer Kanten auf jede beliebige Breite geschnitten werden kann, so dass eine wirtschaftliche Lagerhaltung möglich ist.

Zum Zwecke eines objektiven Vergleichs wurden drei bekannte und ein erfindungsgemässer Antriebsriemen auf der gleichen Prüfvorrichtung und unter den gleichen Betriebsbedingungen geprüft. Die bekannten Antriebsriemen gehören den folgenden Typen an:

A: Baumwolle einlagig, auf Breite gewoben

B: Polyester einlagig, auf Breite gewoben

C: Polyamid/Ramie zweilagig, aus Bahnmaterial geschnitten

Beim erfindungsgemässen Treibriemen besteht das Tragelement 2 aus Polyesterfasern 3, Baumwollfasern 4 und Metallfäden 5 und der unvernetzte Kunststoffbelag 6 aus einem unvernetzten Polyurethan. Unter «Energieabsorption bei Längsdehnung» wird diejenige Energiemenge verstanden, die in einem 1 m langen und 10 mm breiten Riemenstück bei einem longitudinalen Lastwechsel zwischen 5 und 50 N infolge Hysterese absorbiert wird.

Die Ergebnisse des Vergleichsversuches sind in der folgenden Tabelle wiedergegeben.

Tabelle

| Geprüfte Eigenschaft | Einheiten | Riementyp Baumwolle einlagig A | Polyester einlagig B | Polyamid/ Ramie C | Erfindungs- gemäss |
|---|---|---|---|---|---|
| Riemendicke | mm | 1,0 | 0,7 | 0,6 | 0,6 |
| Spannung bei 1% Dehnung | N/cm | 15 | 9 | 15 | 53 |
| Spannung bei 2% Dehnung | N/cm | 29 | 26 | 29 | 92 |
| Spannung bei 4% Dehnung | N/cm | 55 | 77 | 55 | 146 |
| $\mu$-Wert Riemen-Spindel | – | 0,13 | 0,10 | 0,10 | 0,10 |
| $\mu$-Wert Riemen-Tambour | – | 0,27 | 0,8 | 0,7 | 0,7 |
| mittlere Lebensdauer | Monate | 1 | 1,4 | 12 | >18 |
| Energieabsorption bei Längsdehnung | Ws | 0,032 | 0,022 | 0,024 | 0,0013 |
| Drehwinkelfehler | Grad | 0,10 | 0,10 | 0,07 | 0,02 |
| Spindeldrehzahl | $min^{-1}$ | 14560 bis 14576 | 14660 bis 14670 | 14425 bis 14451 | 14663 bis 14675 |
| Drehzahlverlust der nicht gebremsten Spindeln | | | | | |
| 1 Spindel gebremst | % | 0,3 | 0,2 | 0,2 | 0,1 |
| 2 Spindeln gebremst | % | >15,0 | 1,5 | 1,5 | 0,6 |
| Spindel-Beschleunigungszeit | sec. | 3,0 | 3,0 | 3,0 | 2,2 |
| Elektrostatische Aufladung | kV/cm | 1–6 | 10–16 | 0,5–1,2 | 0,05 |

## Patentansprüche

1. Antriebsriemen (1) mit einem textilen Tragelement (2), das aus Garnen oder Zwirnen besteht, die Kunststoff-Fasern (3) mit einer Reissfestigkeit von mehr als 30 cN/Tex und bis mindestens 150°C wärmebeständige Naturfasern (4) enthalten, wobei der Antriebsriemen ein elektrisch leitfähiges Element (5, 8) enthält und das textile Tragelement (2) auf einer Seite mit einem unvernetzten Kunststoffbelag (6) verbunden ist, dadurch gekennzeichnet, dass das textile Tragelement (2) auf der vom Kunststoffbelag (6) abgewandten Seite mit einem vernetzten Kunststoff, vorzugsweise einem vernetzten Polyurethan, imprägniert ist und dass der Kunststoffbelag (6) aus einem unvernetzten Thermoplasten, vorzugsweise einem unvernetzten Polyurethan, besteht.

2. Antriebsriemen nach Anspruch 1, dadurch gekennzeichnet, dass das elektrisch leitfähige Element aus elektrisch leitfähigen Fäden (5), vorzugsweise Metallfäden oder Kohlenstoff-Fasern, in den Garnen oder Zwirnen besteht.

3. Antriebsriemen nach Anspruch 1, dadurch gekennzeichnet, dass das elektrisch leitfähige Element aus einer elektrisch leitfähigen Schicht (8), vorzugsweise einer russhaltigen Haftvermittlerschicht, zwischen dem textilen Tragelement (4) und dem Kunststoffbelag (6) besteht.

4. Antriebsriemen nach einem der Ansprüche 1 bis 3, dadurch gekennzeichnet, dass die Kunststoff-Fasern (3) aus Polyester, vorzugsweise Polyethylenterephthalat, oder aus Polyamid bestehen.

5. Antriebsriemen nach einem der Ansprüche 1 bis 4, dadurch gekennzeichnet, dass die Naturfasern (4) aus Cellulose, vorzugsweise Baumwolle oder Ramie, bestehen.

## Revendications

1. Courroie de transmission (1) comportant un élément de textile (2) constitué de fils ou de retors qui contiennent des fibres artificielles (3) présentant une résistance à la traction de plus de 30 cN/Tex et des fibres naturelles (4) résistant à la chaleur au moins jusqu'à 150°C, la courroie de transmission contenant un élément conducteur électrique (5, 8) et l'élément de support textile (2) étant relié d'un côté à un revêtement en matière plastique non réticulée (6), caractérisée en ce que l'élément de support textile (2), du côté opposé au revêtement de matière plastique (6), est imprégné d'une matière plastique réticulée, de préférence d'un polyuréthanne réticulé, et que le revêtement de matière plastique (6) est constitué d'une matière thermoplastique non réticulée, de préférence d'un polyuréthanne non réticulé.

2. Courroie de transmission suivant la revendication 1, caractérisée en ce que l'élément conducteur électrique est formé des fils conducteurs électriques (5), de préférence des fils métalliques ou des fibres de carbone, dans les fils ou retors.

3. Courroie de transmission suivant la revendication 1, caractérisée en ce que l'élément conducteur électrique est constitué d'une couche conductrice électrique (8), de préférence d'une couche d'un agent adhésif contenant du noir de carbone entre l'élément de support textile (4) et le revêtement de matière plastique (6).

4. Courroie de transmission suivant l'une quelconque des revendications 1 à 3, caractérisée en ce que les fibres artificielles (3) sont des fibres de polyester, de préférence de polytéréphtalate d'éthylène ou de polyamide.

5. Courroie de transmission suivant l'une quelconque des revendications 1 à 4, caractérisée en ce que les fibres naturelles (4) sont des fibres de cellulose, de préférence de coton ou de ramie.

## Claims

1. Drive belt (1) having a textile support element (2) which consists of yarns or threads which contain synthetic fibres (3) having a tear strength of more than 30 cN/Tex and natural fibres (4) which are heat resistant to at least 150°C, the drive belt containing an electrically conductive element (5, 8) and the textile support element (2) being connected at one side to an uncross-linked plastics covering (6), characterised in that the textile support element (2) is impregnated, on the side remote from the plastics covering (6), with a cross-linked synthetic material, preferably a cross-linked polyurethane, and the plastics covering (6) consists of an uncross-linked thermoplastic, preferably an uncross-linked polyurethane.

2. Drive belt according to claim 1, characterised in that the electrically conductive element consists of electrically conductive filaments (5), preferably metal filaments or carbon fibres, in the yarns or threads.

3. Drive belt according to claim 1, characterised in that the electrically conductive element consists of an electrically conductive layer (8), preferably an adhesion promoting layer which contains carbon black, between the textile support element (4) and the plastics covering (6).

4. Drive belt according to one of claims 1 to 3, characterised in that the synthetic fibres (3) consist of polyester, preferably polyethylene terephthalate, or polyamide.

5. Drive belt according to one of claims 1 to 4, characterised in that the natural fibres (4) consist of cellulose, preferably cotton or ramie.

Fig.1

Fig.2

Fig. 3